# EUROPEAN PATENT APPLICATION

(11) **EP 2 234 007 A1**
(43) Date of publication of application: **29.09.2010**
(21) Application number: 09156444.3
(22) Date of filing: 27.03.2009
(51) Int. Cl.: G06F 3/048

(54) **A computer user interface device and method for displaying**

(71) Applicant: Siemens Aktiengesellschaft, 80333 München (DE)
(72) Inventor: Raman, Abhishek, 122002 Gurgaon (IN); Rathi, Ashwani, 122001 Gurgaon, (IN)

(57) **Abstract**

The invention explains an improved virtual keyboard (20) which is more adaptable to user requirements. A computer user interface device comprising a display screen (10) adapted to display a layout of a keyboard (20) in a control pane (15) and a control module (25) adapted to change at least one parameter of at least one key (22) in the layout of the keyboard (20) in the control pane (15).

## Description

The present invention relates to a system and a method for displaying a user interface, particularly displaying a virtual keyboard.

Till date, there used to be only implementations of the keyboard, which are more or less similar to the actual hardware keyboard. So implementation of every key in those keyboards is hard coded. For example, the position, the text that is to be shown on the key, its layout etc. are fixed. This results in keyboards, which are just similar to the traditional hardware keyboards, in which the keys have the same position and text all the time.

There are virtual keyboards or onscreen keyboards like the one used in Windows. Here also a soft copy of the actual hardware keyboard is displayed to the user.

It is an object of the present invention to provide an improved virtual keyboard which is more adaptable to user requirements.

The object of the invention is achieved by the computer user interface device according to claim 1, the method according to claim 10 and the computer program product according to claim 18.

The underlying idea is to use changeable parameters of individual keys of the virtual keyboard to adapt the layout of the virtual keyboard to the needs of a user in a flexible way. This avoids changing the source code for the virtual keyboard as it was required by common virtual keyboards.

In the prior art, it is not possible to change the position or the text of the keys without making a change in the source code. The source code of the computer program has to be changed in order to change even the layout or the numbers of keys.

In a preferred embodiment, the display screen is a touch sensitive screen. This enhances the usability of the virtual keyboard application by enabling the selection of the keys faster and more accurate.

In an alternative embodiment, the parameter includes the position of the keys. In practice each user can have once own preference of the key positions. This enables to position the keys according to the user convenience. The positioning could include interchanging the key positions or even deletion of an existing key position or addition of a new key position.

In an alternative embodiment, the parameter includes the text associated with the keys. This enables the user to change the text associated with a key. For example, if the user wants to add some special character that is not there on an actual hardware keyboard, it can be done.

In an alternative embodiment, the parameter includes the size of the keys. For example, if the user wants to resize the key which he uses frequently or even when he wants to increase or decrease the size of all the keys in the layout. Hence the user can control the visual impact of the keys in the layout.

In an alternative embodiment, computer user interface device further comprises a configuration file associated with the control module. This enables the user to control the layout of the keys and configure or change the parameters of the keys by ease using the said configurable file. For example the configurable file could be a simple Extensible Markup Language (XML) file.

In an alternative embodiment, every key in the layout corresponds to one line in the configuration file and the lines corresponding to the keys are grouped together in a section of the configuration file to have a layout corresponding to the keys in one row arranged from left to right. This structured positioning of the lines in the configuration file enables the user to locate the position of the keys and configure the layout easily using the configuration file.

The present invention is further described hereinafter with reference to illustrated embodiments shown in the accompanying drawings, in which:
FIG 1 illustrates a block diagram of a computer user interface device according to an embodiment of the invention;
FIG 2 illustrates a layout of a virtual keyboard according to an embodiment of the invention;
FIG 3 illustrates a layout of a virtual keyboard according to an alternative embodiment of the invention;
FIG 4 illustrates a layout of a virtual keyboard according to another alternative embodiment of the invention; and
FIG 5 illustrates a flow diagram of the method according to an embodiment of the invention.

There are often times where the user needs to have his keyboard layout simple, reorganized or changed based on his comfort level, his job at hand or his needs. Here the user is given the freedom to change different parameters associated with the keys so that he can built a virtual keyboard of his liking and need which gets displayed in a screen.

The customization of a virtual keyboard might include the following:
- User able to localize the text shown on the keys of the keyboard.
- User able to control the position of the keys on the keyboard.
- User able to customize the layout of the virtual keyboard.
- User able to customize the background color of the key.

User can add customized key to the keyboard, i.e. to say a key with some special character that is not there on an actual hardware keyboard.

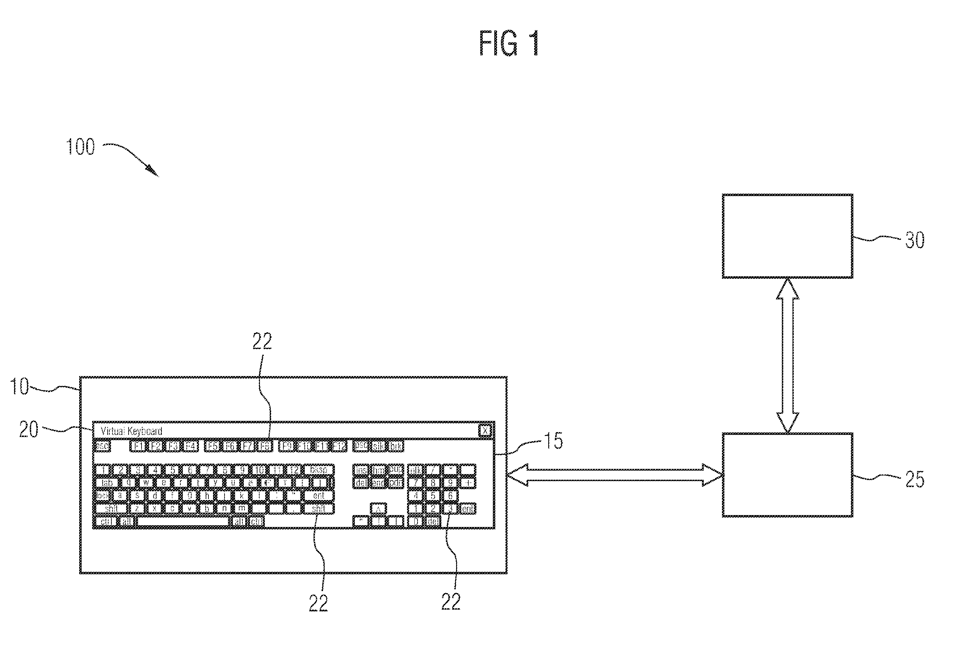

FIG 1 illustrates a block diagram of a computer user interface device 100 according to an embodiment of the invention. The device comprises a display screen 10 adapted to display a layout of a keyboard 20 in a control pane 15 and a control module 25 adapted to change at least one parameter of at least one key 22 in the layout of the keyboard in the control pane 15. The control pane 15 for example could be a window, which the user can control. The term pane broadly refers to a sub-section of a window, where window refers to a scrollable or non scrollable viewing area on the screen. Typically the panes and windows are rectangular in shape but they are not required to be rectangular. The control module 25 is further associated with a configuration file 30, using which the customized layout of the virtual keyboard could be visualized. For example, the control module 25 could be a processing unit or a computer.

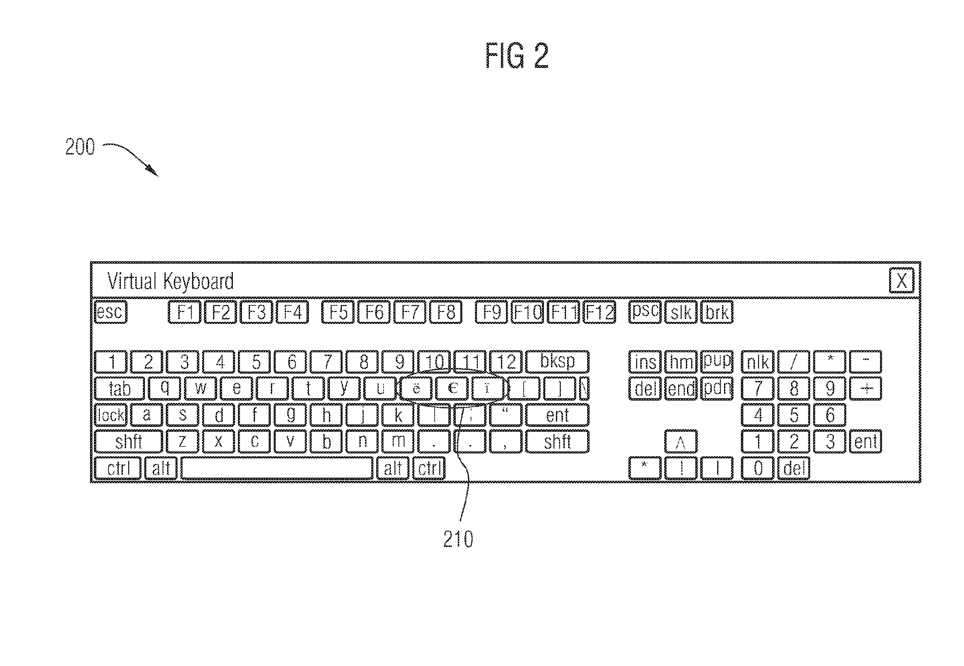

FIG 2 illustrates a layout of a virtual keyboard 200 according to an embodiment of the invention. The configuration file 30 is used as a data source for the various keys that are to be shown on the virtual keyboard 200. The configuration file 30 could be an Extensible Markup Language (XML) file. Here the file could contain the information related to the number of keys to be shown, the text and the position of the keys on the keyboard. It is possible to define the layout of the keyboard in the configuration file. There are tags used to define various sections on the keyboard. All the keys defined under a particular section are positioned in a particular zone of the virtual keyboard.

The character or the text that is to be shown on the keys in the Virtual Keyboard can also be configured in the configuration file. The XML file directly contains the characters that are to be shown on the keys. In case of the foreign characters, the Unicode of the character is provided in the XML and the corresponding character gets displayed on the keyboard. This is shown in the virtual keyboard 200 below as the circled part 210. This part consist of special characters on the keyboard, like characters 'ë', '∈', 'ï'. The user can just use these keys if he or she wants to use that particular character and now he or she is not required to remember the Unicode of that particular character often to have those characters typed in.

The position of a particular key is also defined within the XML. If a particular key has to come after a particular key on the keyboard, then it should be defined after that key in the XML. The positioning and sequencing can be altered as per the requirement by just changing the XML.

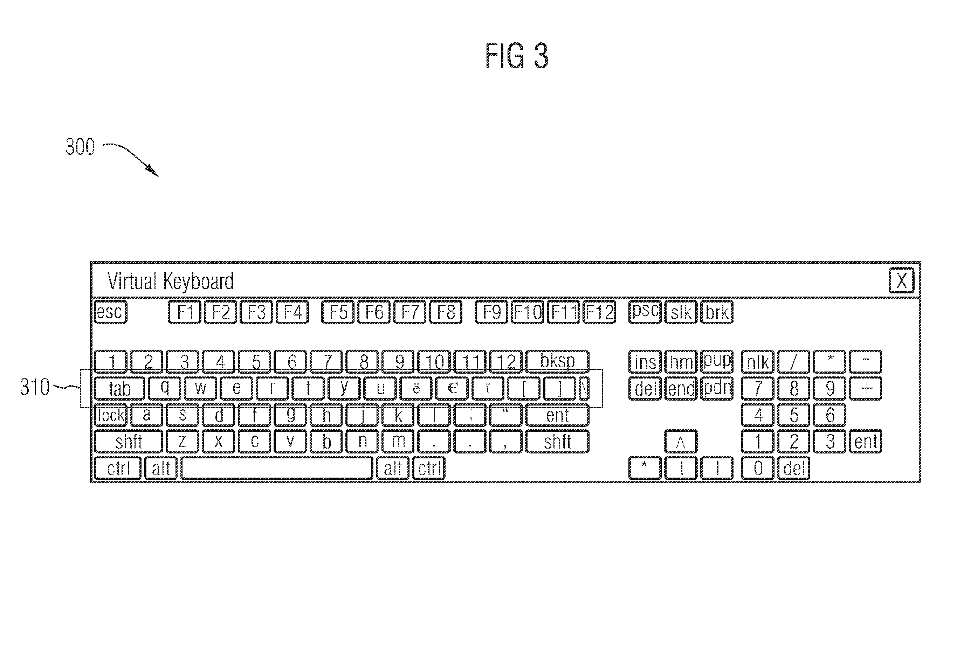

FIG 3 illustrates a layout of a virtual keyboard 300 according to an embodiment of the invention. The configurable keyboard gives the flexibility to the user to do the following:
- To configure the position of the keys in the keyboard.
- To configure the size or dimension of the key as per the liking of the user.
- To configure the text on the key as per the user liking. A user can have an English keyboard but with few extra keys configured to represent non-English characters which he might be using frequently or he might have a non-English locale keyboard with few keys in Chinese locale. Basically he can have keys on keyboard with mix of any number of locales provided the Unicode character exists for that character.
- The user can have a keyboard with any number of keys. The user is not bound to have a keyboard with standard 101 keys. The user can have a keyboard even with minimum of only 1 key or a keyboard with any number of keys e.g. 500,700,900.

All these configurations are provided into an XML file which is provided with the application and user just has to select which configuration he or she wants and the virtual keyboard will be updated accordingly and the user will have a keyboard with his or her selected configuration. Any number of customized configurations can be made available to the user depending on his or her need.

The XML code for generating a selected row in the keyboard layout as shown in FIG 3 is illustrated below.
<Row>
<key type="function" name="VK_TAB" chrNrml="tab" chrShift="tab" chrAltGr="tab" width="1.5" height="1"/>
<key type="alphabet" name="VK_Q" chrNrml="Q" chrShift="q" chrAltGr="Q" width="1" height="1"/>
<key type="alphabet" name="VK_W" chrNrml="W" chrShift="w" chrAltGr="W" width="1" height="1"/>
<key type="alphabet" name="VK_E" chrNrml="E" chrShift="e" chrAltGr="E" width="1" height-"1"/>
<key type="alphabet" name="VK_R" chrNrml="R" chrShift="r" chrAltGr="R" width="1" height-"1"/>
<key type="alphabet" name="VK_T" chrNrml="T" chrShift="t" chrAltGr="T" width="1" height-"1"/>
<key type="alphabet" name="VK_Y" chrNrml="Y" chrShift="y" chrAltGr="Y" width="1" height-"1"/>
<key type="alphabet" name="VK_U" chrNrml="U" chrShift="u" chrAltGr="U" width="1" height-"1"/>
<key type="alphabet" name="VK_I" chrNrml="\u0451" chrShift="i" chrAltGr="I" width="1" height="1"/>
<key type="alphabet" name="VK_O" chrNrml="\u0454" chrShift="o" chrAltGr="O" width="1" height="1"/>
<key type="alphabet" name="VK_P" chrNrml="\u0457" chrShift="p" chrAltGr="P" width="1" height="1"/>
<key type="alphabet" name="VK_BRACELEFT" chrNrml="[" chrShift="{" chrAltGr="[" width="1" height="1"/>
<key type="alphabet" name="VK_BRACERIGHT" chrNrml="]" chrShift="}" chrAltGr="]" width="1" height="1"/>
<key type="alphabet" name="VK_SLASH" chrNrml="\\" chrShift="|" chrAltGr="\\" width="1" height="1"/>
</Row>

Consider that a row 310, is a new row which is getting added to the keyboard. Many characters like "Tab", "q" etc. as shown in the row 310 are getting added in the keyboard along with special characters on the keyboard, like characters 'ë', '∈', 'ï' corresponding to the Unicodes u0451, u0454 & u0457. The XML also defines the width and the height of various keys. Overall effect of this part will be the row 310 which is shown in the FIG 3.

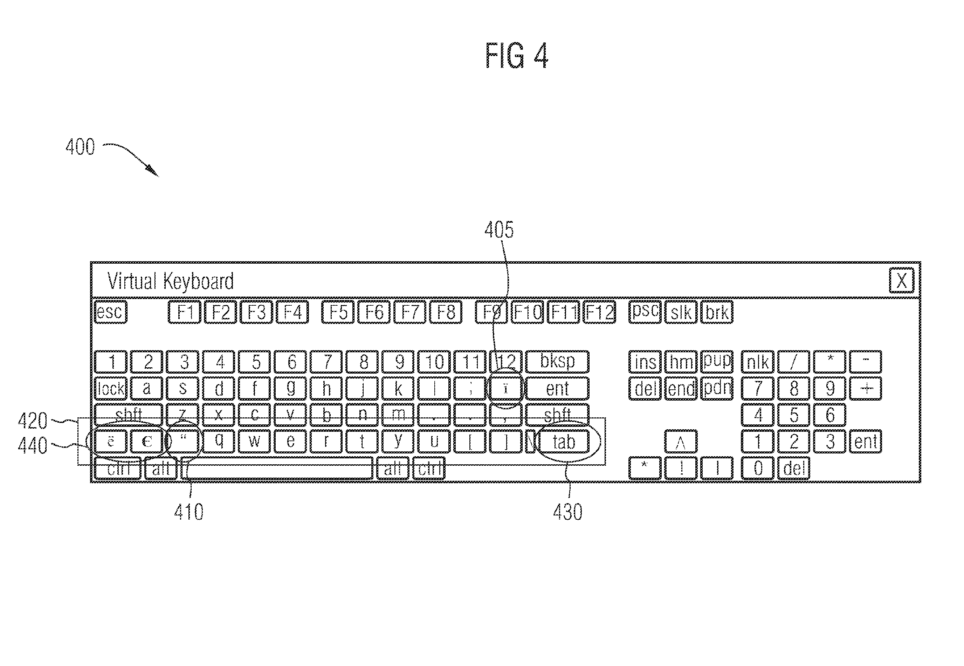

FIG 4 illustrates a layout of a virtual keyboard 400 according to an embodiment of the invention. Positions of the characters 'ï' (Unicode '\u0457') 405 and '"' (Quotation mark) 410 have been interchanged. Character corresponding to '\u0457' is in the third row from the top and character '"' is in the second last row from the top. Row 420 containing the tab character has been moved down in position by 2 rows as compared to that in FIG 3 and is now the second last row from the top. The other two rows that were previously below this row have been moved upwards. Tab key 430 is moved to the end of the row and the other special characters 440 that were previously somewhere at the end of the row as in FIG 3 are now at the start of the row.

The XML code for generating a keyboard layout as shown in FIG 4 is illustrated below.
<Row>
<key type="modifier" name="VK_CAPS_LOCK" chrNrml="lock" chrShift="lock" chrAltGr="lock" width="1" height="1"/>
<key type="alphabet" name="VK_A" chrNrml="A" chrShift="a" chrAltGr="A" width="1" height-"1"/>
<key type="alphabet" name="VK_S" chrNrml="S" chrShift="s" chrAltGr="S" width="1" height="1"/>
<key type="alphabet" name="VK_D" chrNrml="D" chrShift="d" chrAltGr="D" width="1" height="1"/>
<key type="alphabet" name="VK_F" chrNrml="F" chrShift="f" chrAltGr="F" width="1" height="1"/>
<key type="alphabet" name="VK_G" chrNrml="G" chrShift="g" chrAltGr="G" width="1" height="1"/>
<key type="alphabet" name="VK_H" chrNrml="H" chrShift="h" chrAltGr="H" width="1" height="1"/>
<key type="alphabet" name="VK_J" chrNrml="J" chrShift="j" chrAltGr="J" width="1" height="1"/>
<key type="alphabet" name="VK_K" chrNrml="K" chrShift="k" chrAltGr="K" width="1" height="1"/>
<key type="alphabet" name="VK_L" chrNrml="L" chrShift="1" chrAltGr="L" width="1" height="1"/>
<key type="function" name="VK_SEMICOLON" chrNrml=";" chrShift=":" chrAltGr=";" width="1" height="1"/>
**<key type="alphabet" name="VK_P" chrNrml="\u0457" chrShift="p" chrAltGr="P" width="1" height="1"/>**
<key type="function" name="VK_ENTER" chrNrml="ent" chrShift="ent" chrAltGr="ent" width="2" height="1"/> </Row>
<Row>
**<key type="alphabet" name="VK_I" chrNrml="\u0451" chrShift="i" chrAltGr="I" width="1" height="1"/>**
**<key type="alphabet" name="VK_O" chrNrml="\u0454" chrShift="o" chrAltGr="O" width="1" height="1"/>**
**<key type="function" name="VK_COMMA" chrNrml="," chrShift="," chrAltGr="," width="1" height="1"/>**
<key type="alphabet" name="VK_Q" chrNrml="Q" chrShift="q" chrAltGr="Q" width="1" height="1"/>
<key type="alphabet" name="VK_W" chrNrml="W" chrShift="w" chrAltGr="W" width="1" height="1"/>
<key type="alphabet" name="VK_E" chrNrml="E" chrShift="e" chrAltGr="E" width="1" height="1"/>
<key type="alphabet" name="VK_R" chrNrml="R" chrShift="r" chrAltGr="R" width="1" height="1"/>
<key type="alphabet" name="VK_T" chrNrml="T" chrShift="t" chrAltGr="T" width="1" height="1"/>
<key type="alphabet" name="VK_Y" chrNrml="Y" chrShift="y" chrAltGr="Y" width="1" height="1"/>
<key type="alphabet" name="VK_U" chrNrml="U" chrShift="u" chrAltGr="U" width="1" height="1"/>
<key type="alphabet" name="VK_BRACELEFT" chrNrml="[" chrShift="{" chrAltGr="[" width="1" height="1"/>
<key type="alphabet" name="VK_BRACERIGHT" chrNrml="]" chrShift="}" chrAltGr="]" width="1" height="1"/>
<key type="alphabet" name="VK_SLASH" chrNrml="\\" chrShift="|" chrAltGr="\\" width="1" height="1"/>
**<key type="function" name="VK_TAB" chrNrml="tab" chrShift="tab" chrAltGr="tab" width="1.5" height="1"/>**
</Row>

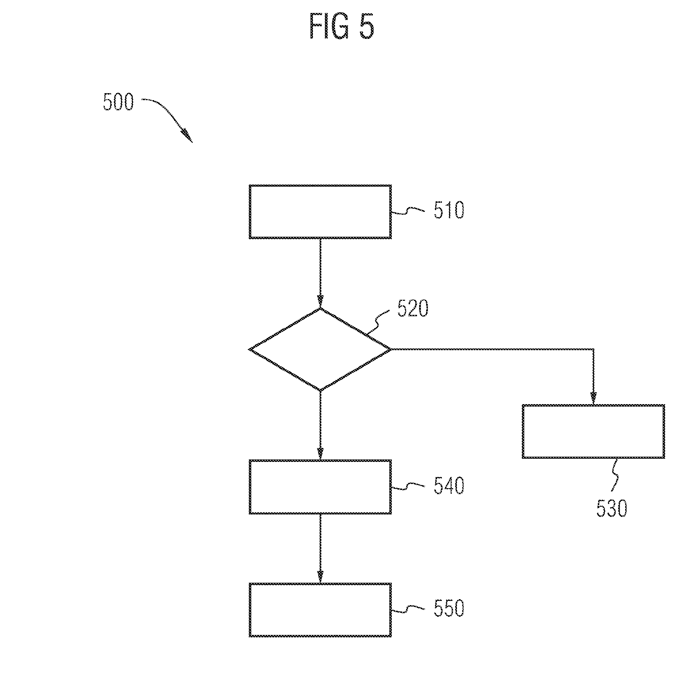

FIG 5 illustrates a flow diagram 500 of the method according to an embodiment of the invention. At step 510 the user triggers the virtual keyboard application. Depending on the circumstances and the work requirement the user takes a decision whether to keep the same settings or change the keyboard layout at step 520. If the user wants to use the default configuration of the keyboard, the said user keeps the said settings and proceeds to use the default layout as shown in step 530. If the user wants a customized virtual keyboard, he or she changes a configuration file accordingly which controls the layout of the virtual keyboard as shown in step 540. This results in a customized virtual keyboard as shown in step 550.

### Using XML for configuring the keyboard gets the user the following benefits:

The layout of the keyboard can be customized. A new section in the keyboard can be defined. The user can have different types of keyboard and locale e.g. the same software can have different XML files for keyboards with different locale, keyboards with same or different locale but a different layout, keyboards with different number of keys so that user can switch between these different types of keyboard as and when they feel like.

Any character in any language for which the Unicode exists can be used in this keyboard by putting it in the XML file and this character is shown in the keyboard as the character that is desired and it can be used as any other normal character.

The position of a particular key is solely dependent on the position of its entry in the XML file. If the position of key needs to be changed, then this has to be redefined at some other position in the XML file and the keyboard will be updated to show the key at the new position. This way we can also customize the layout of the keyboard, without even changing the legacy code.

This mechanism extracts the user interface from XML which contains the position of the key together with the localized text that is to be shown on the key. The user can define his or her customized key containing some foreign character. The user can use a key which contains a character that is not normally shown on a keyboard. Also using this approach, it is possible to add as many numbers of keys on the keyboard as the user want. The user is not limited to the traditional 101 or 102 keys keyboards.

Summarizing, the embodiments explain a virtual keyboard that can be easily configured by the user as per the requirements.

The computer user interface device is adapted to show a virtual keyboard that could be configured accordingly by a user using a simple configuration file, for example in form of an XML file. The user who does not have an in-depth knowledge of coding also can configure the XML configuration file, since it is simple.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the scope of the present invention as defined.

## Claims

1. A computer user interface device (100) comprising:
- a display screen (10) adapted to display a layout of a keyboard (20) in a control pane (15); and
- a control module (25) adapted to change at least one parameter of at least one key (22) in the layout of the keyboard (20) in the control pane (15).

2. The computer user interface device (100) as claimed in claim 1, wherein the display screen (10) is a touch sensitive screen.

3. The computer user interface device (100) as claimed in claim 1 or 2, wherein the parameter includes a position of the keys (22).

4. The computer user interface device (100) as claimed in any of the preceding claims, wherein the parameter includes a text associated with the keys (22).

5. The computer user interface device (100) as claimed in any of the preceding claims, wherein the parameter includes a size of the keys (22).

6. The computer user interface device (100) further comprises a configuration file (30) associated with the control module (25) wherein said configuration file (30) contain the at least one parameter.

7. The computer user interface device (100) as claimed in claim 6, wherein a key (22) in the layout of the keyboard (20) corresponds to one line in the configuration file (30).

8. The computer user interface device (100) as claimed in claim 6, wherein the lines corresponding to the keys (22) are grouped together in a section of the configuration file (30) to have a layout corresponding to the keys (22) in one row arranged from left to right.

9. The computer user interface device (100) as claimed in claim 6, wherein the configuration file (30) is an XML file.

10. A method for displaying a virtual keyboard (20) in a computer comprising the steps of:
- displaying a layout of the virtual keyboard (20) in a control pane (15) in a display screen (10); and
- changing at least one parameter of at least one key (22) in the layout of the keyboard (20) in the control pane (15) using a control module (25).

11. The method according to claim 10, wherein the parameter includes a position of the keys (22).

12. The method according to claim 10, wherein the parameter includes a text associated with the keys (22).

13. The method according to claim 10, wherein the parameter includes a size of the keys (22).

14. The method according to any of the claims 10 to 13, further comprising the step of associating a configuration file (30) with the control module (25) wherein said configuration file (30) contains the at least one parameter.

15. The method according to any of the claims 10 to 14, wherein a key (22) in the layout corresponds to one line in the configuration file (30).

16. The method according to any of the claims 10 to 15, wherein the lines corresponding to the keys (22) are grouped together in a section of the configuration file (30) to have a row in the layout corresponding to the keys arranged from left to right.

17. The method according to any of the claims 10 to 16, wherein the configuration file (30) is an XML file.

18. A computer program product directly loadable into the memory of the computer comprising software code portion for performing the steps of claims 10 to 17.
